# EUROPEAN PATENT SPECIFICATION

(11) **EP 1 339 012 B1**
(45) Date of publication and mention of the grant of the patent: **16.10.2013**
(21) Application number: 02003480.7
(22) Date of filing: 14.02.2002
(51) Int. Cl.: G06F 3/01

(54) **Modular optical mouse for a personal computer**
Modulare optische Maus für ein Personal-Rechner
Souris optique modulaire pour un ordinateur personnel

(43) Date of publication of application: 27.08.2003
(73) Proprietor: Unity Opto Technology Co., Ltd., San Chung City, Taipei Hsien, Taiwan (TW)
(72) Inventor: Chin, Yuan-Cheng, Hsintien City, Taipei Hsien (TW)
(74) Representative: Viering, Jentschura & Partner

(56) References cited:
- EP-A- 0 614 086
- PATENT ABSTRACTS OF JAPAN vol. 2000, no. 01, 31 January 2000 (2000-01-31) -& JP 11 272417 A (NISSIN KOHKI CO LTD), 8 October 1999 (1999-10-08)
- J.E.TANNER, C. MEAD: "A Correlating Optical Motion Detector" PROCEEDINGS, CONFERENCE ON ADVANCED RESEARCH IN VLSI, 23 January 1984 (1984-01-23), pages 57-64, XP008005490 CAMBRIDGE, MA

## Description

### BACKGROUND OF THE INVENTION

### 1. Field of the Invention

The present invention relates to an optical mouse, and more particularly to a modular optical mouse for a personal computer. The optical mouse has a light emitting diode (LED), a sensing element and a projecting lens all of which are integrally formed into a module so as to simplify the structure of the optical mouse and reduce the cost.

### 2. Description of Related Art

Normally, a computer mouse includes a housing composed of a top cover and a base. The base has a hole and a circuit board mounted on the base and having a tracking module corresponding to the hole and a wire connected to the host of the computer. The tracking module has a tracking ball. With such an arrangement, the movement of the tracking ball is able to be transformed into digital signal and sent to the host of the computer so as to accomplish the purpose of signal transmission. However, this kind of computer mouse needs to be connected to the host by means of the wire and to move on a reflection surface (table). Therefore, the movement of the computer mouse is limited by the length of the wire and also the space available on the reflection surface. Furthermore, due to a long period of time rolling on the reflection surface, the tracking ball is easily contaminated by the dust on the reflection surface and thus causes malfunction to the tracking module.

In order to overcome the shortcoming, another optical mouse is invented. With reference to Figs. 11 and 12, a conventional mouse as disclosed in US-A-6281882 includes a base 91, a top cover (not shown), a lens member 92 and a circuit board 93. The circuit board 93 is securely mounted on the base 91 and has a light emitting diode 94 and a sensor 95 mounted thereon. Under the circuit board 93 is the lens member 92, so that the light from the LED 92 is able to pass through the first lens 921 and the reflection lens 923 and then refract to the table 96. The light is then reflected to the second lens 922 and consequently picked up by the sensor 95. The circuit board 93 of this kind has to have a control IC, LED 94, sensor 95 and the lens member 92 which is corresponding to the LED 94, the sensor 95 and the base 91. The total cost of this optical mouse for personal computer is high and it is quite difficult for the user to precisely align the optical path for the reflection and refraction of the light from the LED 92.

EP 0 614 086 A1 discloses a velocity information detecting apparatus having a light source for emitting a coherent beam, a beam splitting member for splitting the beam from the light source into a plurality of beams to irradiate the object, a photodetector for receiving scattered light from the object, and optionally a lens condensing the light into the light receiving element. All these elements are contained in a single receptacle. This combination of features avoids the need of an optical system for bending the optical path of the two beams, which is very simple in structure and suitable for miniaturization. No application to an optical mouse is mentioned.

JP 11-272417 A discloses an optical mouse having a shortened length of optical path and comprising a light emitting diode and a photodiode mounted on a detecting substrate fixed to an optical case, a plate-shaped beam splitter being obliquely fixed to the optical case at 45° with a horizontal face. This improves miniaturization.

The article of John E. Tanner and Carver Mead entitled "A Correlating Optical Motion Detector" in Proc. Conf. Advanced Research in VLSI, 1984, pages 57 to 64, describes an optical motion detector that uses integrated light sensors and analog and digital processing on the same chip. No light emitting diodes of any other light source is mentioned, and a lens is required to project an image onto the chip. This detector has application in optical mouse systems.

To overcome the shortcomings, the present invention intends to provide an improved optical mouse to mitigate or obviate the aforementioned problems.

### SUMMARY OF THE INVENTION

The primary objective of the invention is to provide a modular optical mouse for a personal computer as featured in the independent claim. Preferred embodiments of the present invention are described in the dependent claims. The optical mouse has a light emitting diode (LED), a sensor, an optical lens and a control element integrally formed on a module so that there is no need for the user to have individual inventory for each of the parts. As a consequence of this modular optical mouse, manufacturing cost is kept low.

Another objective of the invention is to provide a modular optical mouse for a personal computer, which eliminates the need for the reflection lens so as to simplify the structure and reduce cost.

Other objects, advantages and novel features of the invention will become more apparent from the following detailed description when taken in conjunction with the accompanying drawings.

### BRIEF DESCRIPTION OF THE DRAWINGS

Fig. 1 is a perspective view of a first preferred embodiment of an optical mouse of the present invention;
Fig. 2 is an exploded perspective view of the optical mouse of the first embodiment of the present invention;
Fig. 3 is a side plan view with partial in section of the first embodiment of the optical mouse in Fig. 1;
Fig. 4 is a perspective view of a second preferred embodiment of the optical mouse of the present invention;
Fig. 5 is a schematic view showing the relationship of parts in the second embodiment of the present invention;
Fig. 6 is a schematic view showing the relationship of parts in a third embodiment of the present invention;
Fig. 7 is a side plan view with partial in section of the fourth embodiment of the optical mouse of the present invention;
Fig. 8 is a schematic view showing the relationship of parts in the fourth embodiment of the present invention;
Fig. 9 is a schematic view showing the relationship of parts in the fifth embodiment of the present invention;
Fig. 10 is a side plan view with partial in section of the sixth embodiment of the present invention;

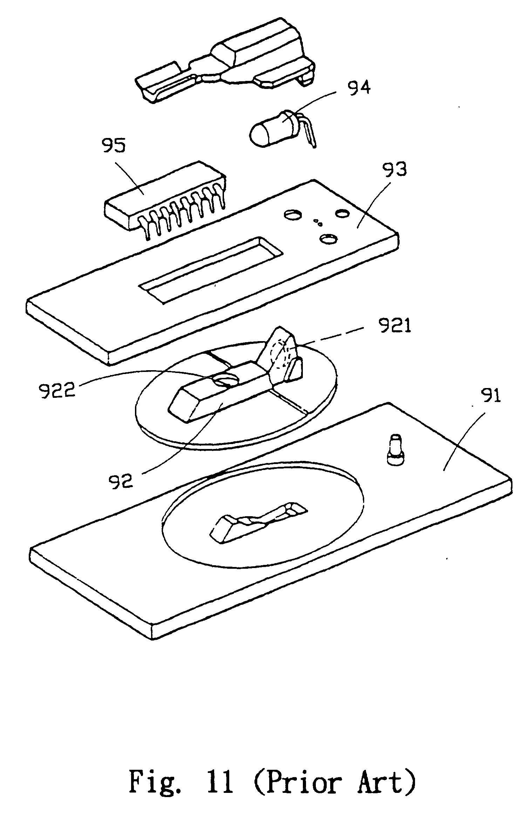

Fig. 11 is an exploded perspective view of a conventional optical mouse; and

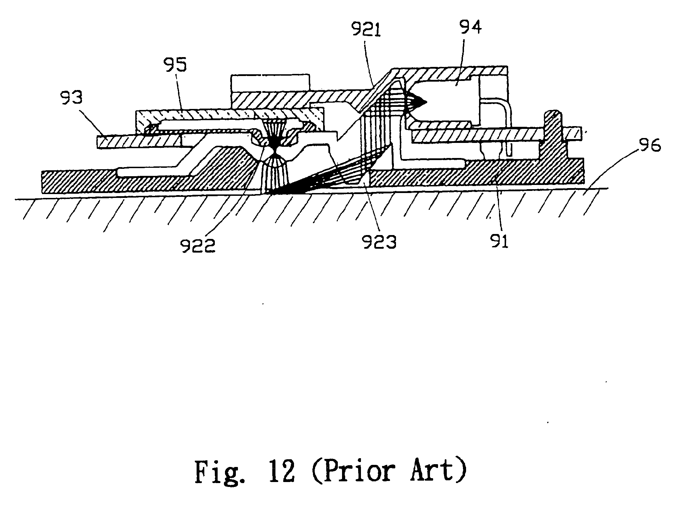

Fig. 12 is a schematic sectional view of the conventional optical mouse in Fig. 11.

### DETAILED DESCRIPTION OF PREFERRED EMBODIMENT

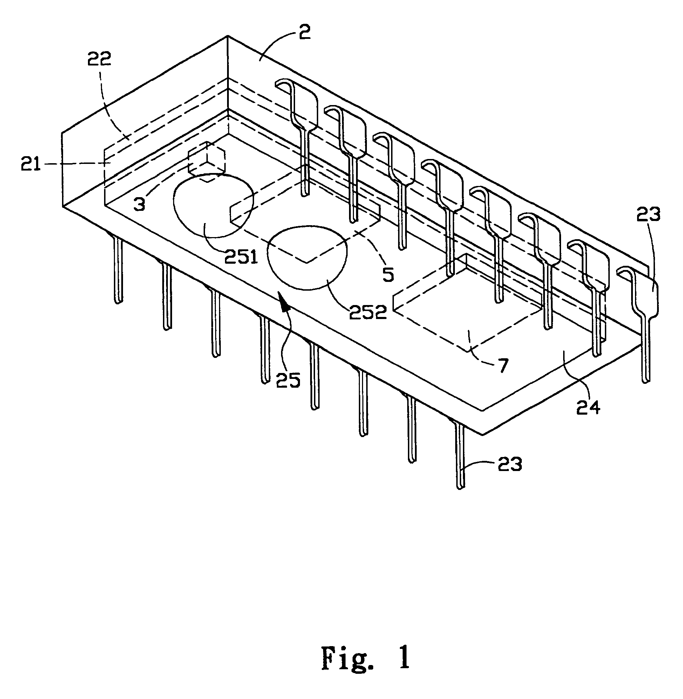

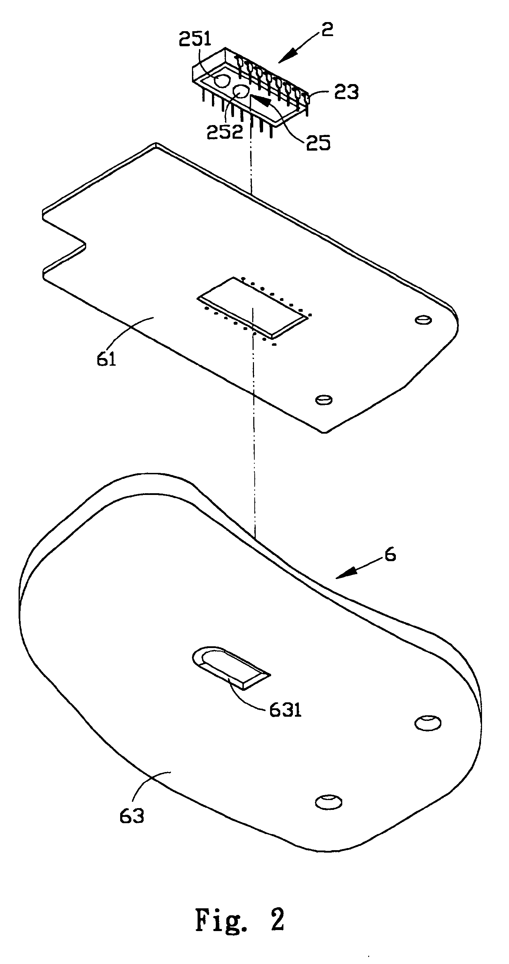

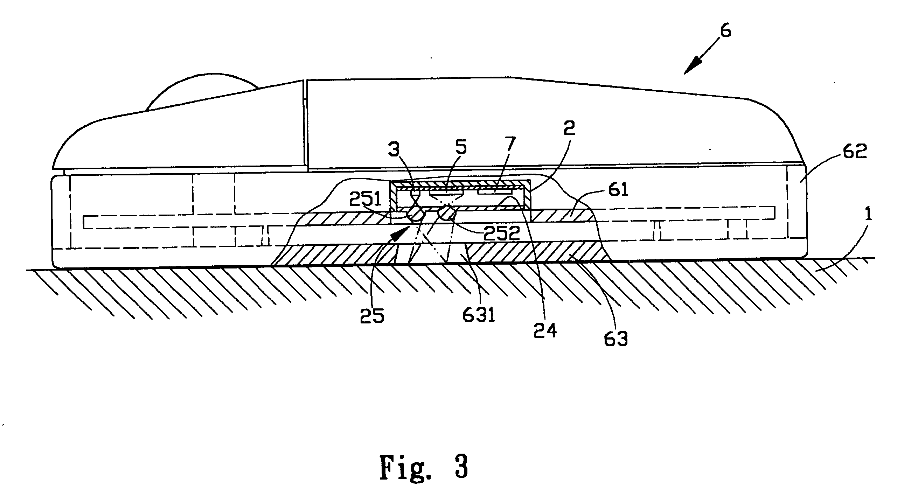

With reference to Figs. 1, 2 and 3, the optical mouse in accordance with the present invention has a body 2, at least one LED 3 (light emitting diode), a sensor 5, an optical element 25 and at least one control element 7.

The body 2 has a predetermined space 21 defined inside the body 2 and having at least one lead 22 securely provided inside the space 21 and feet 23 each electrically connected to one of the feet 23.

The LED 3 is mounted inside the space 21 to electrically connect with the lead 22. The LED 3 is at the bottom of the body 2 and is able to emit visible light, infrared and the like.

The sensor 5 is received in the space 21 to electrically connect with the lead 22 and to correspond to the LED 3.

The optical element 25 is securely received in the space 21 and is composed of a first lens 251 adjacent to the LED 3 and a second lens 252 adjacent to the sensor 5. The first lens 251 and the second lens 252 are able to be integrally formed with a covering 24 of the space 21 of the body 2 or may be attached to a bottom face of the covering 24.

The control element 7 is securely received in the space 21 and is electrically connected to the lead 22. The control element 7 is a control IC (M.C.U).

In this embodiment, the LED 3, the sensor 5, the optical element 25 and the control element 7 are encapsulated inside the space 21 of the body 2. The first lens 251 is so located that the light from the LED 3 is able to pass through the first lens 251 and is refracted by the second lens 252 to be picked up by the sensor 5 and then the control element 7 is able to proceed coordinate encoding and control according to the received signal.

When the optical mouse of the present invention is in use, the body 2 with the LED 3, the sensor 5, the optical element 25 and the control element 7 is able to be attached to the circuit board 61 of the optical mouse 6 having a housing 62 and a base 63. The base 63 has a through hole 631. Therefore, when the LED 3 and the sensor 5 are mounted on the base 63 and on top of the through hole 631, the light from the LED 3 is able to pass through the through hole and the refracted light is able to be picked up by the sensor 5. That is, the light from the LED 3 is first refracted by the first lens 251 and then reflected by the reflection face 1 (table). Thereafter, the light is again refracted by the second lens 252 to be picked up by the sensor 5. Accordingly, the reflection lens 923 used in the conventional optical mouse is eliminated.

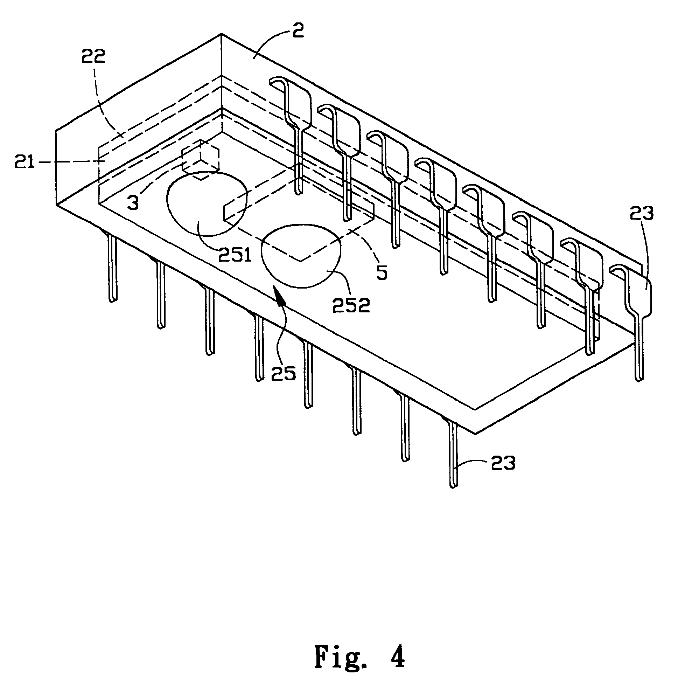

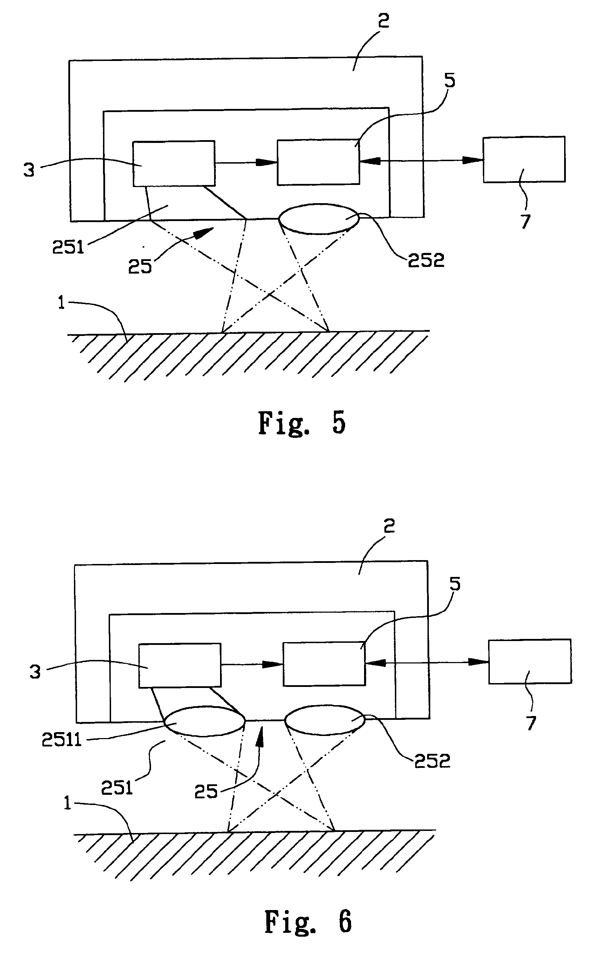

With reference to Figs. 4 and 5, the optical mouse in accordance with the present invention has a body 2, at least one LED 3 (light emitting diode), a sensor 5 and an optical element 25.

The body 2 has a predetermined space 21 defined inside the body 2 and having at least one lead 22 securely provided inside the space 21 and feet 23 each electrically connected to one of the feet 23.

The LED 3 is mounted inside the space 21 to electrically connect with the lead 22. The LED 3 is at the bottom of the body 2 and is able to emit visible light, infrared and the like.

The sensor 5 is received in the space 21 to electrically connect with the lead 22 and to correspond to the LED 3.

The optical element 25 is securely received in the space 21 and is composed of a first lens 251 adjacent to the LED 3 and a second lens 252 adjacent to the sensor 5. The first lens 251 and the second lens 252 are able to be integrally formed with a covering 24 of the space 21 of the body 2 or may be attached to a bottom face of the covering 24.

In this embodiment, the LED 3, the sensor 5, and the optical element 25 are encapsulated inside the space 21 of the body 2. The first lens 251 is so located that the light from the LED 3 is able to pass through the first lens 251 and is refracted by the second lens 252 to be picked up by the sensor 5.

When the optical mouse of the present invention is in use, the body 2 with the LED 3, the sensor 5 and the optical element 25 is able to be attached to the circuit board 61 of the optical mouse 6 having a housing 62 and a base 63. The base 63 has a through hole 631. Therefore, when the LED 3 and the sensor 5 are mounted on the base 63 and on top of the through hole 631, the light from the LED 3 is able to pass through the through hole and the refracted light is able to be picked up by the sensor 5. That is, the light from the LED 3 is first refracted by the first lens 251 and then reflected by the reflection face 1 (table). Thereafter, the light is again refracted by the second lens 252 to be picked up by the sensor 5. Accordingly, the reflection lens 923 used in the conventional optical mouse is eliminated. Also, the optical element 25 may be optional and the LED 3 may be a chip-type LED 3.

With reference to Fig. 6, the third preferred embodiment of the optical mouse shows that the first lens 251 has a convex lens 2511 mounted at a front of the first lens 251.

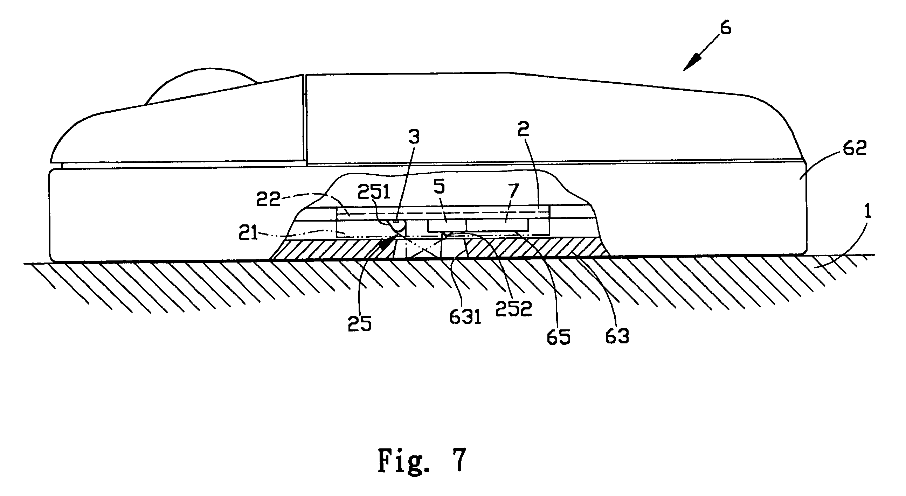

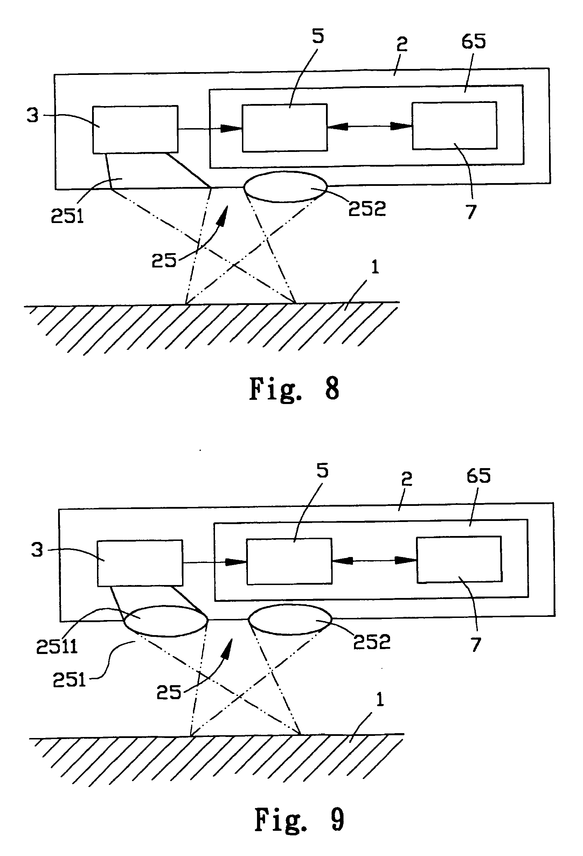

With reference to Figs. 7 and 8, the fourth embodiment of the optical mouse shows that the sensor 5 and the control element 7 may be formed as an integral sensing body 65 so as to function as the sensor 5 and the control element 7.

With reference to Fig. 9, it is to be noted that the first lens 251 has a convex lens 2511 mounted at a front end of the first lens 251.

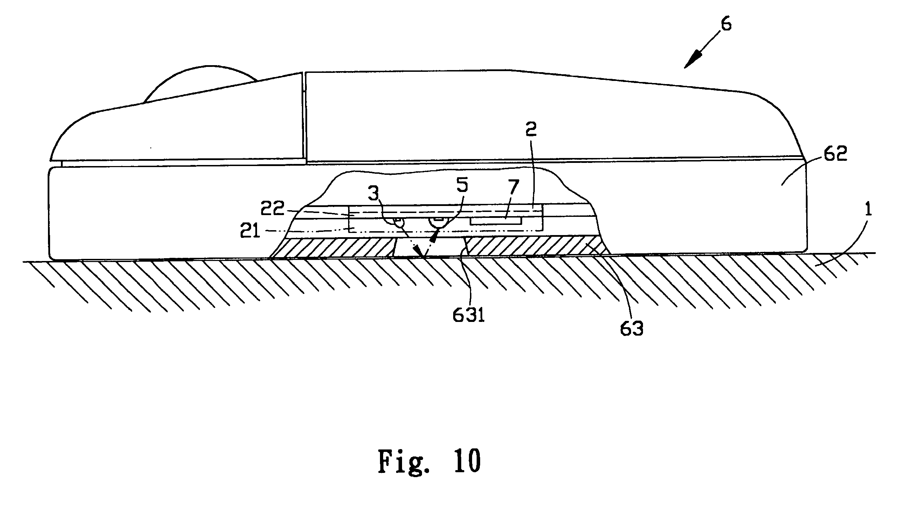

With reference to Fig. 10, the LED 3, the sensor 5 and the control element 7 may be a C.O.B. (Chip On Board) type. In this embodiment, the sensor 5 is a C.O.B. type.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A modular optical mouse (6) for a personal computer, the optical mouse (6) comprising:
a body (2) having a predetermined space (21) defined inside the body (2) and having at least one lead (22) securely provided inside the space (21) and feet (23) each electrically connected to one of the at least one lead (22) ;
at least one light emitting diode (3) mounted inside the space (21) to electrically connect with the lead (22), the light emitting diode (3) being at a bottom of the body (2);
at least one sensor (5) received in the space (21) to electrically connect with the lead (22) and to correspond to the light emitting diode (3); and
an optical element (25) securely received in the space (21) of the body (2) and comprising a first lens (251) adjacent to the light emitting diode (3) and a second lens (252) adjacent to the sensor (5), wherein the at least one light emitting diode (3) and the at least one sensor (5) are encapsulated inside the body (2), whereby the light from the light emitting diode (3) is able to be refracted by the optical element (25) and picked up by the sensor (5).

2. The modular optical mouse (6) as claimed in claim 1, further comprising at least one control element (7) received in the space (21) of the body (2) to be electrically connected to the lead (22).

3. The modular optical mouse (6) as claimed in claim 2, wherein the control element (7) is a control IC.

4. The modular optical mouse (6) as claimed in claim 2, wherein the light emitting diode (3), the sensor (5) and the control element (7) are C.O.B. type.

5. The modular optical mouse (6) as claimed in claim 1, wherein the body (2) is adapted to be attached to a circuit board (61) to align with a through hole (631) in the optical mouse (6).

6. The modular optical mouse (6) as claimed in claim 2, wherein the sensor (5) and the control element (7) are integrally formed as an integral sensing body (65).

7. The modular optical mouse (6) as claimed in claim 1, wherein the body (2) is attachable to the circuit board (61) of the optical mouse (6) having a housing (62) and a base (63), wherein the base (63) has a through hole (631), the light emitting diode (3) and the sensor (5) inside of the body (2) being set on top of the through hole (631).

8. The modular optical mouse (6) as claimed in claim 1, wherein the light emitting diode (3) is able to emit visible light, infrared light and the like.

9. The modular optical mouse (6) as claimed in claim 1, wherein the first lens (251) and the second lens (252) are integrally formed with a covering (24) of the space (21) of the body (2).

10. The modular optical mouse (6) as claimed in claim 1, wherein the first lens (251) further comprise a convex lens (2511) mounted at front end of the first lens (251).

## Patentansprüche

1. Eine modulare optische Maus (6) für einen PersonalComputer, wobei die optische Maus (6) aufweist:
einen Körper (2), der einen vorbestimmten Raum (21), der innerhalb des Körpers (2) definiert ist, und zumindest einen Anschluss (22), der sicher innerhalb des Raums (21) bereitgestellt ist, sowie Füße (23), von denen jeder elektrisch mit einem des zumindest einen Anschlusses (22) verbunden ist, aufweist,
zumindest eine Licht-emittierende Diode (3), die so innerhalb des Raums (21) montiert ist, dass sie elektrisch mit dem Anschluss (22) verbunden ist, wobei sich die Licht-emittierende Diode (3) an einem Boden des Körpers (2) befindet,
zumindest einen Sensor (5), der so in dem Raum (21) aufgenommen ist, dass er elektrisch mit dem Anschluss (22) verbunden ist und zu der Licht-emittierenden Diode (3) korrespondiert, und
ein optisches Element (25), das sicher in dem Raum (21) des Körpers (2) aufgenommen ist und das aufweist eine erste Linse (251), die benachbart zu der Licht-emittierenden Diode (3) ist, und eine zweite Linse (252), die benachbart zu dem Sensor (5) ist, wobei die zumindest eine Licht-emittierende Diode (3) und der zumindest eine Sensor (5) innerhalb des Körpers (2) eingekapselt sind, wodurch das Licht von der Licht-emittierenden Diode (3) im Stande ist, mittels des optischen Elements (25) gebrochen zu werden und mittels des Sensors (5) aufgenommen zu werden.

2. Die modulare optische Maus (6) gemäß Anspruch 1, ferner aufweisend zumindest ein Steuerelement (7), das in dem Raum (21) des Körpers (2) so aufgenommen ist, dass es elektrisch mit dem Anschluss (22) verbunden ist.

3. Die modulare optische Maus (6) gemäß Anspruch 2, wobei das Steuerelement (7) ein Steuer-IC ist.

4. Die modulare optische Maus (6) gemäß Anspruch 2, wobei die Licht-emittierende Diode (3), der Sensor (5) und das Steuerelement (7) vom COB-Typ sind.

5. Die modulare optische Maus (6) gemäß Anspruch 1, wobei der Körper (2) angepasst ist, um an einer Platine befestigt zu werden, um mit einer Durchgangsöffnung (631) in der optischen Maus (6) ausgerichtet zu sein.

6. Die modulare optische Maus (6) gemäß Anspruch 2, wobei der Sensor (5) und das Steuerelement (7) integral als ein integraler Erfassungskörper (65) gebildet sind.

7. Die modulare optische Maus (6) gemäß Anspruch 1, wobei der Körper (2) an der Platine (61) der optischen Maus (6), die ein Gehäuse (62) und eine Basis (63) aufweist, angebracht werden kann, wobei die Basis (63) eine Durchgangsöffnung (631) aufweist, und wobei die Licht-emittierende Diode (3) und der Sensor (5) innerhalb des Körpers (2) auf die Durchgangsöffnung (631) gesetzt sind.

8. Die modulare optische Maus (6) gemäß Anspruch 1, wobei die Licht-emittierende Diode (3) dazu im Stande ist, sichtbares Licht, Infrarot-Licht und ähnliches zu emittieren.

9. Die modulare optische Maus (6) gemäß Anspruch 1, wobei die erste Linse (251) und die zweite Linse (252) integral mit einer Abdeckung (24) des Raums (21) des Körpers (2) gebildet sind.

10. Die modulare optische Maus (6) gemäß Anspruch 1, wobei die erste Linse (251) ferner eine konvexe Linse (2511) aufweist, die an einem vorderen Ende der ersten Linse (251) montiert ist.

## Revendications

1. Souris optique modulaire (6) pour un ordinateur personnel, la souris optique (6) comprenant :
un corps (2) ayant un espace prédéterminé (21) défini à l'intérieur du corps (2) et ayant au moins une broche de connexion (22) solidement agencée à l'intérieur de l'espace (21) et des pattes (23) chacune électriquement raccordée à l'une des au moins une broche de connexion (22) ; au moins une diode électroluminescente (3) montée à l'intérieur de l'espace (21) afin de se connecter électriquement à la broche de connexion (22), la diode électroluminescente (3) étant au niveau d'un fond du corps (2) ;
au moins un capteur (5) reçu dans l'espace (21) afin de se connecter électriquement à la broche de connexion (22) et correspondre à la diode électroluminescente (3) ; et
un élément optique (25) solidement reçu dans l'espace (21) du corps (2) et comprenant une première lentille (251) adjacente à la diode électroluminescente (3) et une seconde lentille (252) adjacente au capteur (5), dans lequel la au moins une diode électroluminescente (3) et le au moins un capteur (5) sont encapsulés à l'intérieur du corps (2), moyennant quoi la lumière en provenance de la diode électroluminescente (3) peut être réfractée par l'élément optique (25) et captée par le capteur (5).

2. Souris optique modulaire (6) selon la revendication 1, comprenant en outre au moins un élément de commande (7) reçu dans l'espace (21) du corps (2) devant être électriquement connecté à la broche de connexion (22).

3. Souris optique modulaire (6) selon la revendication 2, dans laquelle l'élément de commande (7) est un CI de commande.

4. Souris optique modulaire (6) selon la revendication 2, dans laquelle la diode électroluminescente (3), le capteur (5) et l'élément de commande (7) sont du type puce sur carte.

5. Souris optique modulaire (6) selon la revendication 1, dans laquelle le corps (2) est adapté pour être fixé à une carte de circuit (61) pour s'aligner avec un trou traversant (631) dans la souris optique (6).

6. Souris optique modulaire (6) selon la revendication 2, dans laquelle le capteur (5) et l'élément de commande (7) sont formés d'un seul tenant comme un corps de détection d'un seul tenant (65).

7. Souris optique modulaire (6) selon la revendication 1, dans laquelle le corps (2) peut être fixé à la carte de circuit (61) de la souris optique (6) ayant un logement (62) et une base (63), la base (63) ayant un trou traversant (631), la diode électroluminescente (3) et le capteur (5) à l'intérieur du corps (2) étant installés au-dessus du trou traversant (631).

8. Souris optique modulaire (6) selon la revendication 1, dans laquelle la diode électroluminescente (3) peut émettre une lumière visible, une lumière infrarouge et similaires.

9. Souris optique modulaire (6) selon la revendication 1, dans laquelle la première lentille (251) et la seconde lentille (252) sont formées d'un seul tenant avec un couvercle (24) de l'espace (21) du corps (2).

10. Souris optique modulaire (6) selon la revendication 1, dans laquelle la première lentille (251) comprend en outre une lentille convexe (2511) montée au niveau d'une extrémité avant de la première lentille (251).
